# EUROPEAN PATENT APPLICATION

(11) **EP 4 589 235 A1**
(43) Date of publication of application: **23.07.2025**
(21) Application number: 24152543.5
(22) Date of filing: 18.01.2024
(51) Int. Cl.: F28D 1/03, F28F 3/12, F28D 21/00

(54) **HEAT EXCHANGE ASSEMBLY**

(71) Applicant: Rimac Technology LLC, 10431 Sveta Nedelja (HR)
(72) Inventor: Mottram, Mahesh, Wallington, London, SM6 8EU (GB); Ponomar, Andriy, 10110 Zagreb (HR); Miller, Jack, Harrogate, North Yorkshire, HG2 9NJ (GB)
(74) Representative: Hoffmann Eitle

(57) **Abstract**

There is provided a heat exchange assembly for a battery system, the battery system comprising a plurality of battery cells and at least one electronic component, the heat exchange assembly comprising: a heat exchange plate comprising a first plate and a second plate arranged to face the first plate, the heat exchange plate being arranged to accommodate the plurality of battery cells on at least one of the first plate and the second plate in a first portion of the heat exchange plate and to accommodate the at least one electronic component on at least one of the first plate and the second plate in a second portion of the heat exchange plate, the heat exchange plate comprising further at least one first flow channel for accommodating a heat exchange fluid and formed between the first plate and the second plate in the first portion of the heat exchange plate.

## Description

### TECHNICAL FIELD

The present invention relates to the field of battery systems comprising a plurality of battery cells and more particularly to a heat exchange assembly for a battery system and a battery system comprising the heat exchange assembly.

### BACKGROUND

Batteries comprising a plurality of battery cells are playing an increasing role in energy storage for both mobility and grid storage applications.

The temperature of the battery cells is critical for the performance of the battery cells, for example for the charge and discharge capacity of the battery cells. The temperature of the battery cells affects also the lifetime of the battery cells and accordingly the lifetime of the battery.

During operation, the battery cells produce heat which needs to be properly rejected from the battery in order that a safe operation of the battery is ensured.

Further, heating of the battery cells may be required in situations in which the temperature of the battery influenced, for example, by the temperature of the surrounding environment of the battery, is disadvantageous for the operation of the battery. In such situations, it may be required that the battery is heated, at least up to a predetermined temperature, above which safe operation of the battery can be guaranteed before and during the battery is operated.

For this, the battery is normally equipped with a system for heat exchange. A system for heat exchange normally employs a heat exchange fluid for heat exchange between the battery cells and the heat exchange fluid.

The battery may be associated with at least one further electronic component, such as for example, an inverter, a motor controller, a DC or AC power converter, for controlling the electrical output of the battery. The combination of the battery comprising the plurality of battery cells with the at least one further electronic component may also be called a battery system.

Normally, in the battery system, the at least one electronic component tends to have a separate system for heat exchange. Providing a separate system for heat exchange for the at least one electronic component allows for improved temperature control of the at least one electronic component, however, at the cost of increased costs for manufacturing of the battery system and increased complexity of the battery system and an increased space for accommodating the separate system for heat exchange.

Therefore, there is a need for providing a heat exchange assembly for a battery system that can address the above-described drawbacks.

Accordingly, it is an object of the present invention to provide for a heat exchange assembly for a battery system that can provide for an effective heat exchange at low manufacturing costs and low complexity of the battery system.

### SUMMARY

To achieve this object, in one aspect the present invention provides a heat exchange assembly for a battery system, the battery system comprising a plurality of battery cells and at least one electronic component, the heat exchange assembly comprising:
a heat exchange plate, the heat exchange plate comprising a first plate and a second plate arranged to face the first plate,
the heat exchange plate being arranged to accommodate the plurality of battery cells on at least one of the first plate and the second plate in a first portion of the heat exchange plate and being arranged to accommodate the at least one electronic component on at least one of the first plate and the second plate in a second portion of the heat exchange plate,
the heat exchange plate comprising further at least one first flow channel for accommodating a heat exchange fluid and formed between the first plate and the second plate in the first portion of the heat exchange plate.

To achieve this object, in a further aspect the present invention provides an energy storage system comprising: a plurality of battery cells; at least one electronic component adapted to control electrical output of the plurality of battery cells; and a heat exchange assembly supporting the plurality of battery cells and the at least one electronic component, the heat exchange assembly comprising: a heat exchange plate having a first plate and a second plate arranged to face the first plate, the plurality of battery cells being arranged on a first portion of the heat exchange plate, the at least one electronic component being arranged on a second portion of the heat exchange plate such that there is a predefined gap along the heat exchange plate between the plurality of battery cells and the at least one electronic component, the heat exchange assembly further comprising a first fluid channel for accommodating a heat exchange fluid and formed between the first plate and the second plate in the first portion of the heat exchange plate, and
a second fluid channel for accommodating the heat exchange fluid and formed between the first plate and the second plate in the second portion of the heat exchange plate, wherein the second fluid channel branches off from an inlet portion of the first fluid channel to an outlet portion of the first fluid channel to bypass the first portion of the heat exchange plate, wherein a first portion of the heat exchange fluid passes through the first fluid channel to perform heat exchange with the plurality of battery cells, and a second portion of the heat exchange fluid passes through the second fluid channel to perform heat exchange with the at least one electronic component, wherein the second fluid channel has a sinusoidal profile, and has a cross-sectional area different from the cross-sectional area of the first fluid channel such that a fluid flow rate through the first fluid channel is different from the fluid flow rate through the second fluid channel, wherein a heat exchange rate between the plurality of battery cells and the first portion of the heat exchange plate is different from a heat exchange rate between the electronic component and the second portion of the heat exchange plate.

### BRIEF DESCRIPTION OF THE DRAWINGS

Embodiments of the present invention which are presented for better understanding the inventive concept of the present invention, but which are not to be seen as limiting the present invention, will now be described with reference to the figures in which:
- Fig. 1: shows schematically a heat exchange assembly according to an embodiment of the present invention;
- Fig. 2a, b, c: show schematically a heat exchange assembly according to embodiments of the present invention;
- Fig. 3: shows schematically a heat exchange assembly according to an embodiment of the present invention;
- Fig. 4: shows schematically a heat exchange assembly according to an embodiment of the present invention;
- Fig. 5: shows schematically a heat exchange assembly according to an embodiment of the present invention;
- Figs. 6a, b, c and d: show schematically a heat exchange assembly according to an embodiment of the present invention;
- Fig. 7: shows schematically a battery system according to an embodiment of the present invention;
- Fig. 8: shows schematically a battery system according to an embodiment of the present invention;
- Fig. 9: shows schematically a battery system according to an embodiment of the present invention;

### DETAILED DESCRIPTION

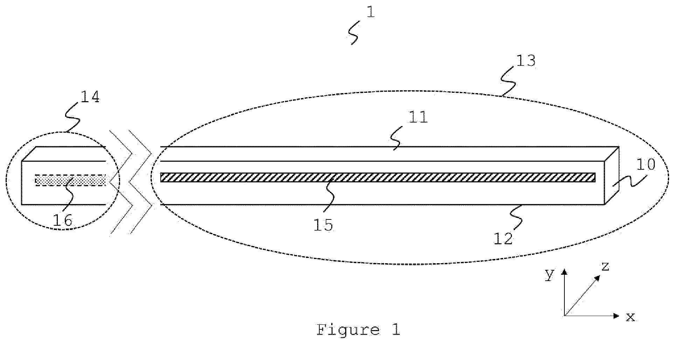

There is shown in figure 1 schematically a heat exchange assembly 1 for a battery system according to an embodiment of the present invention. In one or more embodiments of the present invention, the heat exchange assembly 1 is provided in a battery system 100. In other words, in one or more embodiments of the present invention, the battery system 100 comprises the heat exchange assembly and one or more further elements. The battery system 100 may also be called an energy storage system.

In an embodiment of the present invention the battery system 100 comprises a plurality of battery cells and at least one electronic component. The battery system 100 comprises further the heat exchange assembly 1 according to the embodiments described herein. The heat exchange assembly 1 is arranged to support the plurality of battery cells and the at least one electronic component. In other words, the heat exchange assembly 1 is arranged to accommodate the plurality of battery cells and the at least one electronic component.

The battery system 100 may be a multilevel converter with energy storage, such as an AC battery. In an AC battery, the components of the AC battery are closely located to each other. This brings challenges for efficient heat exchange while keeping up the compact design of the AC battery. The present invention aims at addressing these challenges and more specifically, proposes combining the thermal management of the battery cells with the thermal management of the at least one electronic component into a single thermal management system of the battery system 100 by providing the heat exchange assembly 1 according to the embodiments described herein, with the aim of reducing material costs, development costs as well as manufacturing costs, reducing the complexity of the battery system 100 and improving the compactness of the battery system 100.

As will become apparent from the subsequent disclosure, the energetic efficiency of the battery system 100 can be improved since by using the heat dissipated through the at least one electronic component, smaller amount of heating power from a heater is required for heating the battery cells in a cold climate environment. Lower heating power consumption during heating cycles will increase the energetic efficiency of the battery systems 100, in particular if the heating cycles need to be applied regularly, as the case may be in cold climate environment. If the battery system 100 cannot draw energy from the power grid, for example during a power outage, lower heating power consumption will contribute to a higher discharge capacity of the battery system since less of the stored energy in the battery system is used for heating.

It is to be understood that the thermal management of the battery system 100 may involve a thermal management for cooling the battery cells and/or the at least one electronic component, and/or thermal management for heating the battery cells and/or the at least one electronic component.

In embodiments of the present invention, the at least one electronic component may be adapted to control electrical output of the plurality of battery cells. The at least one electronic component may be or may comprise at least one power electronic component and/or at least one associated electronic component. An associated electronic component may be any one or more of a balancing resistor, or a pre-charging circuit required for control of the battery system 100.

In the embodiment of the present invention shown in figure 1, the heat exchange assembly 1 comprises a heat exchange plate 10. The heat exchange plate 10 comprises a first plate 11 and a second plate 12 arranged to face the first plate 11. There is shown in figure 1 that the first plate 11 is arranged to face the second plate 12 along the y direction. The heat exchange plate 10 may be formed by two metal sheets, each metal sheet corresponding to one of the first plate 11 and the second plate 12, joined together at their periphery. The first plate 11 and the second plate 12 may be joined together by at least one lateral surface. The metal may be aluminium.

The heat exchange plate 10 is arranged to accommodate the plurality of battery cells on at least one of the first plate 11 and the second plate 12 in a first portion 13 of the heat exchange plate 10 and is arranged to accommodate the at least one electronic component on at least one of the first plate 11 and the second plate 12 in a second portion 14 of the heat exchange plate 10.

In the embodiment of the present invention, the first portion 13 is to be understood as the part of the heat exchange plate 10 on which the plurality of the battery cells are to be accommodated and the second portion 14 is to be understood as the part of the heat exchange plate 10 on which the at least one electronic component is to be accommodated.

Preferably, the heat exchange plate 10 is arranged to accommodate the plurality of battery cells in the first portion 13 and is arranged to accommodate the at least one electronic component in the second portion 14 such that there is a predefined gap along the heat exchange plate 10 between the plurality of battery cells and the at least one electronic component when arranged in the respective portions. This predefined gap prevents the heat transfer between the plurality of battery cells and the at least one electronic component.

The first portion 13 and the second portion 14 may be adjacent, non-overlapping portions of the heat exchange plate 10. The first portion 13 and the second portion 14 being adjacent to each other may mean that the first portion 13 and the second portion 14 are adjoining portions. In other words, the first portion 13 and the second portion 14 may be continuous portions of the heat exchange plate 10. It is to be understood that the wording "continuous portions" indicates configurations of the heat exchange plate 10 in which the heat exchange plate 10 is a single-piece element, but it also indicates configurations of the heat exchange plate 10 in which the heat exchange plate 10 is at least a two-piece element, each piece corresponding to one of the first portion 13 and the second portion 14, however, the pieces, or in other words, the first portion 13 and the second portion 14 are joined together. The joining may be performed by using mechanical means, such as fastening means or using other methods for joining two metal elements, such as brazing, soldering or bonding.

It is to be noted that although there is shown in figure 1 a broken line between the first portion 13 and the second portion 14, this broken line serves to illustrate that the first portion 13 and the second portion 14 are separate portions of the heat exchange plate 10 in the sense that the plurality of battery cells are accommodated on the first portion 13 and the at least one electronic component is accommodated on the second portion 14.

The heat exchange plate 10 further comprises at least one first flow channel 15 for accommodating a heat exchange fluid. The at least one first flow channel 15 is formed between the first plate 11 and the second plate 12 in the first portion 13 of the heat exchange plate 10.

In some implementations of embodiments of the present invention, the heat exchange fluid may be a heat exchange fluid for cooling of the battery cells for cooling application. In other implementations of embodiments of the present invention, the heat exchange fluid may be a heat exchange fluid for heating of the battery cells for heating applications. In some implementations of embodiments of the present invention, the same heat exchange fluid may be used for cooling and for heating, while in other implementations of embodiments of the present invention different heat exchange fluids may be used for cooling and for heating. The heat exchange fluid may be for example, water or oil. It is to be understood that a heater (also called system heater here below) may normally be provided to heat up the heat exchange fluid. The heater may be provided as a part of the battery system 100 or may be an external heater.

Hence, the present invention provides for an integrated heat exchange plate 10 for heat exchange fluid-based heat exchange for the plurality of battery cells and the at least one electronic component of the battery system 100. The battery system 100 may be a battery system for multilevel conversion. Embodiments of the present invention may also be used with a further heat exchange path provided to one or more other electronic components within the battery system 100, such as monitoring chips, balancing resistors and processors.

In one or more embodiments of the present invention, the heat exchange plate 10 may further comprise at least one second flow channel 16 for accommodating the heat exchange fluid. The at least one second flow channel 16 may be formed between the first plate 13 and the second plate 14 in the second portion of the heat exchange plate 10. The second flow channel 16 may be optional. For this reason, the second flow channel 16 is shown in figure 1 with a dashed line. In some implementations of embodiments of the present invention, the second flow channel 16 may not be provided. In these implementations, heat exchange with respect to the at least one electronic component is performed by the heat exchange plate 10. In other words, the heat exchange plate 10 may act as a heat sink. It is to be understood that based on the heat exchange fluid flowing through the at least one first flow channel 15, the temperature of the heat exchange plate 10, and in particular the temperature of the first plate 11 and the second plate 12 also changes in the second portion 14 of the heat exchange plate 10 compared to the situation in which no heat exchange fluid is flowing through the at least one first flow channel 15.

In other embodiments of the present invention, for example in implementations in which more effective heat exchange is required for the at least one electronic component, the at least one second flow channel 16 may be provided. In these embodiments of the present invention, further to the heat exchange plate 10 acting as a heat sink, the heat exchange fluid flowing through the at least one second flow channel 16 enhances the heat exchange.

The at least one electronic component may be provided on at least one of the first plate 11 and/or second plate 12 using a heat exchange material provided between the at least one electronic component and the first plate 11 and/or the second plate 12. The heat exchange material may be, for example, a thermal paste, thermal pad or a thermal glue. Such heat exchange material may provide structural stability of the mounted at least one electronic component and may further enhance the heat exchange between the at least one electronic component and the heat exchange plate 10. However, such heat exchange material is optional and the at least one electronic component may also be directly provided on at least one of the first plate 11 and/or second plate 12 and mounted by way of using mechanical mounting means, for example, fastening means.

In one or more embodiments of the present invention, the at least one second flow channel 16 may be formed to branch off from the at least one first flow channel 15 on at least one position of the at least one first flow channel 15.

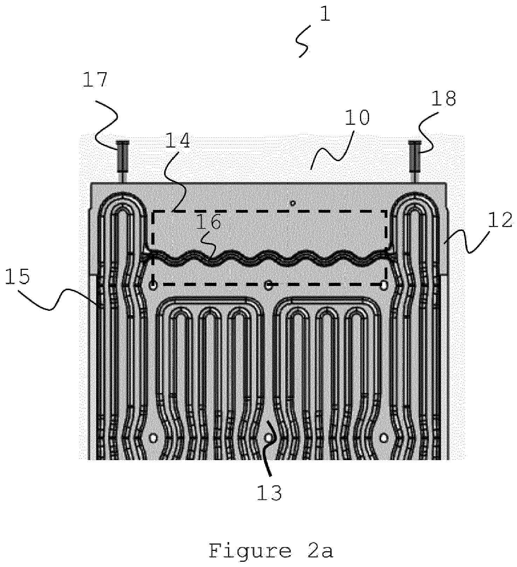

There is shown in figure 2a schematically a heat exchange assembly 1 according to an embodiment of the present invention in which the at least one second flow channel 16 may be formed to branch off from the at least one first flow channel 15 on at least one position of the at least one first flow channel 15. In this embodiment of the present invention the second portion 14 is in the upper part of the heat exchange plate 10, while the first portion 11 is the rest of the heat exchange plate 10. In this embodiment of the present invention, the heat exchange plate 10 may comprise at least one inlet port 17 for distributing a heat exchange fluid in the at least one first flow channel 15 and at least one outlet port 18 for distributing the heat exchange fluid away from the at least one first flow channel 15. Preferably, as it is shown in figure 2a, the at least one position where the at least one second flow channel 16 branches off from the at least one first channel 15 is in or is proximal to an inlet portion of the at least one first flow channel 15. The inlet portion of the at least one first flow channel 15 may be seen as a portion of the at least one first flow channel 15 arranged after the inlet port 17. The inlet portion of the at least one first flow channel may be seen as the portion of the at least one flow channel before the heat exchange fluid reaches the plurality of battery cells.

There is shown in figure 2a that in this embodiment of the present invention, one first flow channel 15 and one second flow channel 16 is provided, however, this is only an example and more than one first flow channel 15 and/or more than one second flow channel 16 may be provided. The one second flow channel 16 branches off from the at least one first channel on a first position (in the left-hand side of the figure, close to the inlet port 17) and it branches into (or feeds into) the at least one first channel (in the right-hand side of the figure, close to the outlet port 18) on another position. The portion of the at least one first channel 15 before the outlet port 18 may also be called an outlet portion of the at least one first flow channel 15. The outlet portion may be seen as the portion of the at least one first flow channel 15 after the heat exchange fluid has passed the plurality of battery cells. Preferably, the at least one second flow channel 16 is formed to branch into the at least one first flow channel 15 on at least one position of the at least one first flow channel 15 in the outlet portion of the at least one first flow channel 15.

In this embodiment of the present invention, since the at least one second flow channel 16 is formed to branch off from the at least one first flow channel 15 on at least one position of the at least one first flow channel 15, a first portion of the heat exchange fluid passes through the at least one second flow channel 16 to perform heat exchange with the at least one electronic component, and a second portion of the heat exchange fluid passes through the at least one first flow channel 15 to perform heat exchange with the plurality of battery cells. This allows that a portion of the heat exchange fluid is used for heat exchange for the at least one electronic component, while the remaining of the heat exchange fluid is used for heat exchange for the plurality of battery cells.

In this embodiment of the present invention, the second flow channel 16 may be seen as a bypass channel. The flow of the heat exchange fluid may also be called a parallel flow. Hence, in this embodiment of the present invention, the heat exchange plate 10 has separate flow channels for heat exchange transfer for the battery cells and the at least one electronic component.

The heat exchange assembly 1 in this embodiment of the present invention in which the at least one second flow channel 16 may be formed to branch off from the at least one first flow channel 15 on at least one position of the at least one first flow channel 15 brings an advantage in the reduced number of components of the battery system 100. In addition, the heat generated by the at least one electronic component and transferred away via the heat exchange plate 10 and the at least one second flow channel 16 does not negatively impact the temperature spread across the battery cells within the battery system 100. Moreover, when heat exchange fluid is circulated in cold climate conditions, the heat generated by the at least one electronic component and transferred via the heat exchange fluid can be used to provide heating to the plurality of battery cells.

There is shown in figure 2a that the at least one second flow channel 16 has a sinusoidal profile. This improves the heat exchange since the sinusoidal profile increases the contact area of the at least one second flow channel 16 with the first plate and/or the second plate.

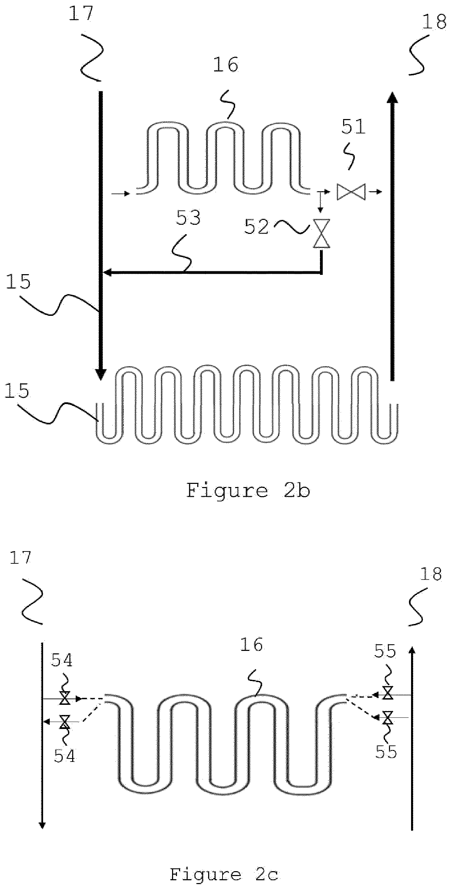

There is shown in figure 2b an embodiment of the present invention in which the heat exchange assembly 1 further comprises at least one third flow channel 53, a first restriction means 51 and a second restriction means 52. Each of the first and second restriction means 51, 52 may be a valve. Each valve may be one-way valve, however, this is not limiting. The first restriction means 51 may be arranged before the position at which the at least one second flow channel 16 branches into (or feeds into) the at least one first channel 15. The second restriction means 52 may be provided before the first restriction means 51.

The at least one third flow channel 53 may be arranged to branch off from the at least one first flow channel 15 in a position which is after the position in which the at least one second flow channel 16 branches off from the at least one first channel 15.

The at least one third flow channel 53 may be arranged to be in fluid communication with the at least one first flow channel 15. The at least one third flow channel 53 may be arranged to be in a fluid communication with the at least one second flow channel 16 via the second restriction means 52.

The first restriction means 51 may be arranged to control the heat exchange fluid flow between the at least one second flow channel 16 and the at least one first flow channel 15 at the position where the at least one second flow channel 16 branches into the at least one first flow channel 15. The second restriction means 52 may be arranged to control the heat exchange fluid between the at least one second flow channel 16 and the at least one third flow channel 53.

Each of the first restriction means 51 and 52 may be arranged to be operable to be in at least one of two states: an opened state and a closed state. It is to be understood that a control unit as part of the battery system 100 or as an external unit may be provided to control each of the first restriction means 51 and second restriction means 52 to be in one of the at least two states.

Placing the first restriction means 51 in the opened state and placing the second restriction means 52 in the closed state allows for operation of the at least one second flow channel 16 as a bypass channel as elaborated in respect to figure 2a. With this, the heat transferred from the at least one electronic component does not heat the plurality of battery cells.

Placing the first restriction means 51 in the closed state and placing the second restriction means 52 in the opened state allows the heat exchange fluid that that has been warmed by heat transfer with the at least one electronic component to rejoin the heat exchange fluid in the at least one first flow channel 15 to therefore warm the plurality of battery cells and to reduce the heat required from the system heater for heating the heat exchange fluid or speed up the heating cycle.

Placing both of the first restriction means 51 and second restriction means 52 in the opened state enables to reduce the amount of heat transferred from the at least one electronic component electronics to the plurality of battery cells.

The at least one third channel 53 may also be formed between the first plate 11 and the second plate 12. The manufacturing of the at least one third flow channel 53 may be facilitated by manufacturing the second portion 14 of the heat exchange plate 10 as a separate component and joining it with the first portion 13 of the heat exchange plate 10.

There is shown in figure 2c a further embodiment of the present invention. In this embodiment of the present invention, the heat exchange assembly 1 may further comprise at least two first restriction means 54 arranged between the at least one second flow channel 16 and the position of the at least one first flow channel 15 where the at least one second flow channel 16 branches off from the at least one first flow channel 15. The heat exchange assembly may further comprise at least two second restriction means 55 arranged between the at least one second flow channel 16 and the position where the at least one second flow channel 16 branches into the at least one first flow channel 15.

Each one of the at least two first restriction means 54 may be arranged to control the heat exchange fluid flow in the opposite direction of the other one of the two first restriction means 54 and each one of the at least two second restriction means 55 may be arranged to control the heat exchange fluid flow in the opposite direction of the other one of the two second restriction means 55.

In one embodiment of the present invention, each one of the at least two first restriction means 54 and each one of the at least two second restriction means 55 may be a one-way valve. Each of the one-way valves is normally arranged to allow the heat exchange fluid to flow through it in one direction only. In other words, each of the at least two first restriction means 54 and each of the at least two second restriction means 55 may be controlled to be in an opened state or a closed state. In an opened state, each of the at least two first restriction means 54 and at least two second restriction means 55 allows for heat exchange fluid flow in one direction only. By alternating which one of the at least two first restriction means 54 and at least two second restriction means 55 are in the opened state and which one are in the closed state, the heat exchange fluid either flows through the at least one second flow channel 16 as a bypass channel, as elaborated in respect to figure 2a, or at least a portion of the heat exchange fluid in the at least one second flow channel 16 is recirculated in the at least one first flow channel, heating the incoming heat exchange fluid flow to pass through the at least one first flow channel 15 to heat up the plurality of battery cells. It is to be understood that a heater may normally be provided to heat up the heat exchange fluid, as elaborated above.

It is to be understood that "after", "before" and "between" as well as "branches off" and "branches into" indicate the arrangement of the respective positions and elements with respect to the flow of the heat exchange fluid from the inlet port 17 to the outlet port 18.

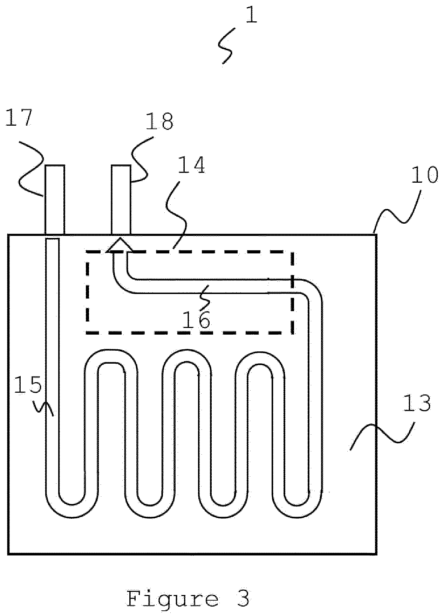

There is shown in figure 3 schematically a heat exchange assembly 1 according to another embodiment of the present invention. In this embodiment of the present invention, the at least one second flow channel 16 is an extension of the at least one first flow channel 15 in the second portion 14 of the heat exchange plate 10. Accordingly, the heat exchange fluid entering the heat exchange plate 10 via the inlet port 17 flows through the at least one first flow channel 15 and proceeds to flow through the at least one second flow channel 16 before being distributed away from the heat exchange plate 10 via the outlet port 18 (represented with arrow).

The flow of the heat exchange fluid in this embodiment of the present invention may also be called a series flow. The advantage of this arrangement of the first flow channel 15 and the second flow channel 16 in this embodiment of the present invention is that the same temperature difference across the components (battery cells and at least one electronic component) is lower for the same overall flow rate. For example, if the target temperature spread across the plurality of battery cells is less than 5°C this could be achieved with lower overall flow rate. However, this arrangement may lead to a higher pressure drop within the battery system 100. This may require increasing the dimensions of the at least one second flow channel 16 and imposing more geometrical constraints to the at least one second flow channel 16 and/or the at least one first flow channel 15. In addition, it may be more challenging to configure the overall flow path with good coverage for the components (battery cells and at least one electronic component) of the battery system 100.

The size and the form of the at least one first flow channel 15 and the at least one second flow channel 16 is designed to enable distributing the required proportion of heat exchange fluid flow to the plurality of battery cells and the at least one electronic component. By way of a non-limiting example, the size and the form of the at least one flow channel 15 and the at least one second flow channel 16 may be designed such that a higher percentage of the heat exchange fluid flows in the at least one first flow channel 15 and a comparatively lower percentage of the heat exchange fluid flows in the at least one second flow channel 16. As another example, approximately 80% of the heat exchange fluid may flow in the at least one first flow channel 15 and approximately 20% of the heat exchange fluid may flow in the at least one second flow channel 16.

The flow of the heat exchange fluid in each one of the at least one first flow channel 15 and at least one second flow channel 16 may be balanced by increasing or decreasing the cross-section of each of the at least one first flow channel 15 and at least one second flow channel 16 and/or by increasing the turbulence of the flow. The turbulence of the flow may be increased with providing at least one bend portion to the at least one first flow channel 15 and the at least one second flow channel 16.

Alternatively, or additionally, one or more members, for example one or more fins, may be provided in each of the at least one first flow channel 15 and at least one second flow channel 16.

The term "balanced flow" is to be understood as a flow characterized with an adjustable or controllable flow rate of the heat exchange fluid.

Therefore, in one or more embodiments of the present invention, each of the at least one first flow channel 16 and at least one second flow channel 16 comprises at least one bend portion. Preferably the number of bend portions of the at least one first flow channel 15 is different from the number of bend portions of the at least one second flow channel 16.

Preferably, in one or more embodiments of the present invention, the cross-sectional area of the at least one first flow channel 15 is different from the cross-sectional area of the at least one second flow channel 16. This enables that a fluid flow rate of the heat exchange fluid through the at least one first flow channel 15 is different from the fluid flow rate of the heat exchange fluid through the at least one second flow channel 16 enabling that the heat exchange rate between the plurality of battery cells and the first portion 13 of the heat exchange plate 10 is different from the heat exchange rate between the at least one electronic component and the second portion 14 of the heat exchange plate 10. This enables tailoring of the heat exchange rate in the battery system 100.

In one or more embodiments of the present invention, the first portion 13 and the second portion 14 of the heat exchange plate 10 are adjacent to each other (the first portion 13 and the second portion 14 are adjoining portions), as elaborated above and are arranged in a plane. In these embodiments of the present invention, the heat exchange plate 10 is a flat plate. By way of example, in the heat exchange assembly schematically shown in figure 2a and figure 3, the heat exchange plate 10 is a flat plate.

In one or more embodiments of the present invention, the first portion 13 and the second portion 14 of the heat exchange plate 10 are adjacent to each other (the first portion 13 and the second portion 14 are adjoining portions) and are arranged in different planes with an angle between them. In some embodiments, the angle may be 90° or approximately 90°. Approximately 90° may indicate 90°±5° to account for manufacturing tolerances. In these embodiments of the present invention the heat exchange plate 10 may be formed as a single-piece element or as a two-piece element. The heat exchange plate 10 may be formed as a single-piece element by bending a flat heat exchange plate 10, or in other words by sheet metal folding a flat heat exchange plate 10. Sheet metal folding a flat heat exchange plate 10 may be advantageous in embodiments of the present invention in which the at least one second flow channel is not provided. It is to be understood that the angle may be approximately 90° due to manufacturing imperfections. The heat exchange plate 10 may be formed as a two-piece element by arranging the first portion 13 and the second portion 14 in different planes and then joining the first portion 13 and the second portion 14. The joining may be performed by using mechanical means, such as fastening means or using other methods for joining two metal elements, such as brazing, soldering or bonding.

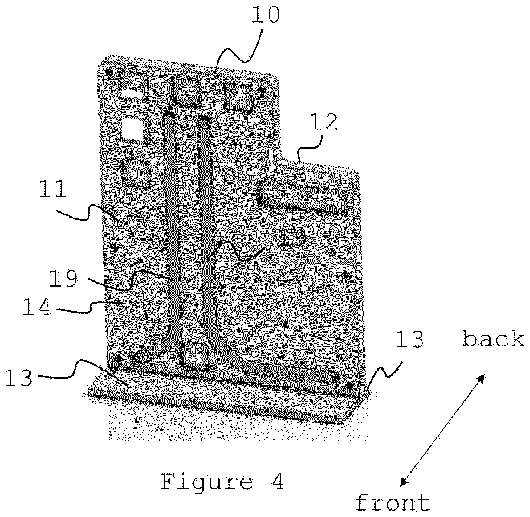

A heat exchange plate 10 according to these embodiments of the present invention in which the first portion 13 and the second portion 14 are in different planes is shown in figure 4. In these embodiments of the present invention, it can be said that the heat exchange plate 10 has heat exchange interfaces in more than one plane. This configuration of the heat exchange plate 10 may increase the number of heat exchange interfaces. For example, in figure 4, the second portion may be the vertical portion and the first portion may be the horizontal portion. It is to be noted that only a part of the first portion 13 is shown in figure 4. The first portion 14 may be provided in the front side but also in the back side in the figure. This enables that a larger number of battery cells are provided in the first portion 13.

In these embodiments of the present invention in which the first portion 13 and the second portion 14 are provided in different planes, the heat exchange for the at least one electronic component can be achieved by the heat exchange plate 10 only, meaning that the heat exchange plate is acting as a heat sink, without providing the at least one second flow channel 16. As elaborated above, optionally, a heat exchange material can be provided between the at least one electronic component and the corresponding first plate 11 and second plate 12, for example a thermal paste, thermal pad or a thermal glue.

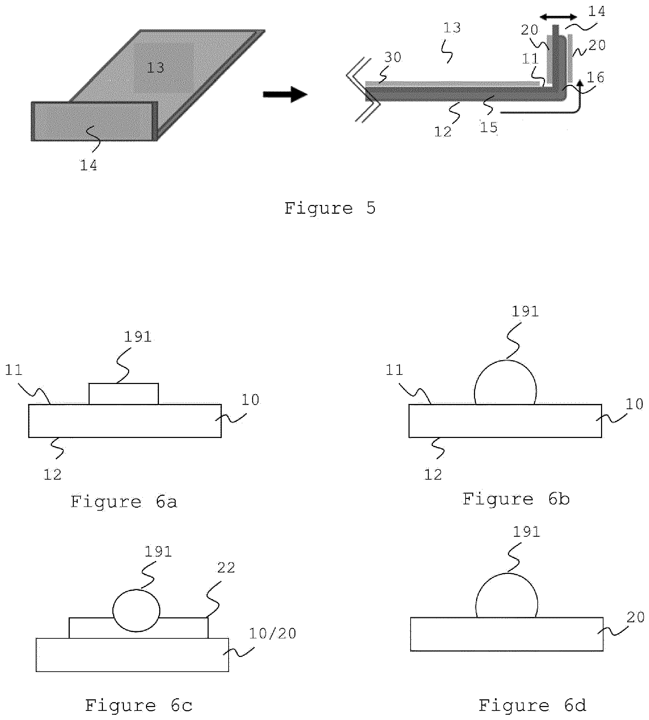

In some embodiments of the present invention in which the first portion 13 and the second portion 14 are provided in different planes the second flow channel 16 may be provided in the second portion 14 of the heat exchange plate 10. The heat exchange assembly according to such embodiment of the present invention is schematically shown in figure 5. There is shown in figure 5 that the at least one first flow channel 15 extends as at least one second flow channel in the second portion 14 of the heat exchange plate 10. The advantage of this configuration is that the number of components, like fittings may be reduced. The number of potential leak paths may also be reduced. Further, the heat exchange for the at least one electronic component is improved. In the embodiment shown in figure 5 at least one electronic component is provided on each of the first plate 11 and the second plate 12 in the second portion 14 of the heat exchange plate 10.

In one or more embodiment of the present invention, in addition or alternatively to providing the at least one second flow channel 16, one or more heat exchange members 19 may be provided. There is shown in figure 4 that two heat exchange members 19 are arranged on the first plate 11.

In other words, in one or more embodiments of the present invention, the heat exchange assembly 1 may comprise at least one heat exchange member 19 arranged on the first plate 11 and/or the second plate 12 for transferring heat from the at least one electronic component to the first portion 13 of the heat exchange plate.

The at least one heat exchange member 19 may comprise at least one tube element 191 filled with a phase-changing medium. Such heat exchange member 19 may also be called a heat pipe. The phase-changing medium may be a phase-changing fluid. The heat pipe is using the phase changing of the phase-changing medium to absorb heat and release heat.

The at least one tube element 191 may have at least one contact surface arranged to be in contact with the heat exchange plate 10. There is shown in figure 6a and figure 6b that the at least one tube element is arranged on the first plate 11 of the heat exchange plate 10 and has a direct contact with the first plate 11 of the heat exchange plate 10.

In other embodiments of the present invention, the at least one tube element 191 may be in contact with the at least one electronic component 20, as shown in figure 6d.

The at least one contact surface of the at least one tube element 191 may be a flat surface or a curved surface. The contact between the at least one tube element 191 and the heat exchange plate 10 or the at least one electronic component 20 may be a direct contact or indirect contact. There is shown in figures 6a and 6b that the at least one tube element 191 is in direct contact with the heat exchange plate 10. There is shown in figure 6a and 6b that the contact surface is a flat surface. The cross-section of the at least one tube element 191 may be a rectangular cross-section, as it is shown in figure 6a. In other words, a flattened at least one tube element 191 may be used. This may improve the structural stability of the heart exchange assembly 1. In another embodiment of the present invention, the cross-section of the at least one tube element 191 may be a semi-circular cross-section, as it is shown in figure 6b. In other words, the surface of the at least one tube element 191 may be flattened on the surface in contact with the heat exchange plate 10 or the at least one electronic component 20 to increase the heat transfer area, while the remaining part may have a cylindrical shape to maintain the vapour cavity space inside the at least one tube element 191, for the optimal thermal conductivity.

The contact surface may be a curved surface as is shown in figure 6c. There is shown in figure 6c that the heat pipe may be provided on the heat exchange plate 10 or the at least one electronic component 20. There is further shown in figure 6c that the contact is indirect. In other words, there is shown in figure 6c that a heat exchange material 22 is provided between the at least one tube element 191 and the heat exchange plate 10/at least one electronic component 20. In some embodiments of the present invention, the heat exchange material 22 may increase the structural stability of the heat exchange assembly 1, in particular in embodiments of the present invention in which the contact surface is a curved surface. In other words, in some embodiments of the present invention, the heat exchange material 22 may also act as an adhesive material for mounting the at least one tube element 191 and thereby facilitate the easiness of the manufacturing process. The heat exchange material 22 may be for example, a thermal paste, thermal pad or a thermal glue.

In other embodiments of the present invention, for example in embodiments in which there is a direct contact between the at least one tube element 191 and the heat exchange plate 10/at least one electronic component 20, the at least one tube element 191 may be mounted on the heat exchange plate 10/at least one electronic component by using mechanical means, such as fastening means. Other ways of mounting the at least one tube element 191 may be by way of brazing or soldering. This way of mounting may achieve a very good thermal conductivity at the boundary between the at least one tube element 191 and the heat exchange plate 10/at least one electronic component 20. It is to be understood that the different ways of mounting may be combined.

In an embodiment of the present invention, the heat exchange member 19 may be arranged in the second portion 14 and may be arranged to extend at least to a part of the first portion 13.

Preferably, the heat exchange member 19 is arranged in the second portion 14 in an area which at least partially overlaps with an area arranged to accommodate the at least one electronic component 22. This improves the heat exchange transfer between the at least one electronic component 20 and the heat exchange plate 10.

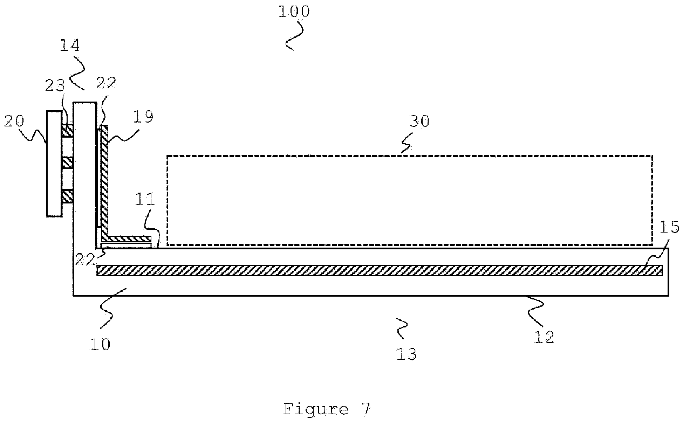

There is shown in figure 7 a battery system 100 comprising the heat exchange assembly 1 according to an embodiment of the present invention. In this embodiment of the present invention, the heat exchange member 19 has at least one bend portion with bending angle corresponding to the angle between the first portion 13 and the second portion 14 of the heat exchange plate 10. Such heat exchange member 19 may also be called a folded heat exchange member 19 or a folded heat pipe.

There is shown in figure 7 that the heat exchange member 19 is provided on the first plate 11. A heat exchange material 22 is provided between the heat exchange member 19 and the first plate 11, however, the heat exchange material 22 is optional. As elaborated above, the at least one heat exchange member 19 may be mounted by way of brazing, soldering, or bonding. In the embodiment of the present invention illustrated in figure 7, the at least one electronic component 20 is provided in the second portion 14 on the second plate 12. The at least one electronic component is arranged on the second plate 12 by way of using a heat exchange material 23. However, the heat exchange material 23 is optional. The heat exchange material 23 for providing the at least one electronic component 20 may be the same type of material as the heat exchange material for providing the at least one heat exchange member 19 or may be a different type of material. The folded heat exchange member 19 shown in figure 7 increases the heat exchange transfer between the at least one electronic component 20 and the first portion 13 of the heat exchange plate 10.

In this embodiment of the present invention the at least one second flow channel 16 may not be provided in the second portion 14, and the second portion 14 of the heat exchange plate 10 may be formed by a solid extension of the first portion 13 so that the heat exchange plate 10 is manufactured as a single piece heat exchange plate 10. The heat exchange plate 10 may be manufactured as a single piece, for example by way of sheet metal folding the heat exchange plate 10, as elaborated above. Naturally, the heat exchange plate 10 may also be manufactured as a two-piece heat exchange plate 10. Anyway, the manufacturing process is simplified by not providing the at least one second flow channel and the heat exchange is still achieved since the main heat transfer path is via the heat exchange member 19.

There is shown in figure 7 that in this embodiment, the heat exchange member 19 is arranged in the first portion 13 in an area that does not overlap with an area arranged to accommodate the plurality of battery cells 30. This enables that a higher number of battery cells is accommodated in the first portion 13.

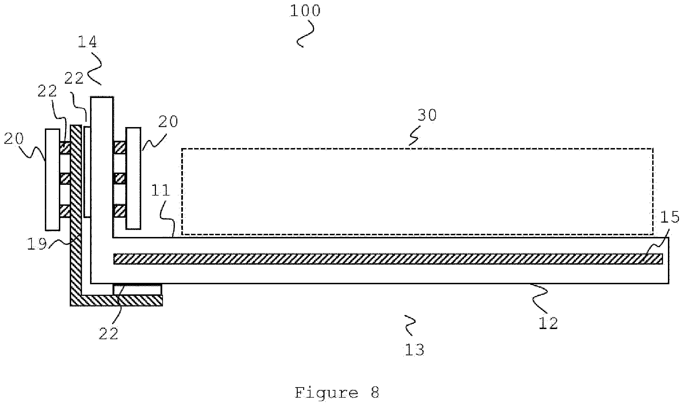

In other embodiment of the present invention, illustrated in figure 8, the at least one heat exchange member 19 may be provided on the second plate 12. In this embodiment of the present invention, at least one electronic component 20 may be provided on the first plate 11 and at least one electronic component 20 may be provided on the at least one heat exchange member 19 either directly or via a heat exchange material 23. The at least one electronic component 20 provided on the at least one heat exchange member 19 may be an electronic component that requires higher degree of heat exchange than the at least one electronic component provided on the first plate 11. There is shown in figure 7 that in this embodiment of the present invention, the battery cells are provided on the first plate 11. Providing the at least one heat exchange member 19 on the second plate 12 does not compromise, for example does not reduce, the available area for arranging the plurality of battery cells 13.

In other words, in one or more embodiments of the present invention, it may be preferred to arrange the heat exchange member 19 on one of the first plate 11 and second plate 12 and to arrange the plurality of battery cells 30 may be arranged on the other one of the first plate 11 and second plate 12.

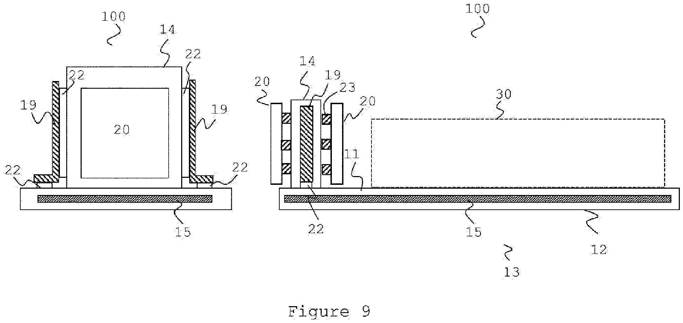

In one or more embodiments of the present invention, more than one heat exchange member 19 may be used. The plurality of heat exchange members 19 may be arranged in different direction. A battery system 100 comprising the heat exchange assembly 1 according to an embodiment of the present invention is shown in figure 9. In the left panel in figure 9 a front view of the heat exchange assembly is shown, while in the right panel a side view of the heat exchange assembly is shown. This arrangement may be advantageous in configurations of the battery system 100 in which the at least one electronic component has smaller width that the battery cells, the heat exchange member 19 may facilitate use of the spare space for heat exchange transfer. In this embodiment of the present invention, the first plate 11 and the second plate 12 are joined together by at least one lateral surface. The heat exchange member 19 is arranged on the at least one lateral surface in the second portion 14 and extends at least to a part of the first portion 11.

In summary, the present invention provides for an integrated heat exchange plate 1 for heat exchange fluid-based heat exchange transfer for the plurality of battery cells and the at least one electronic component in a battery system.

Although detailed embodiments have been described, these only serve to provide a better understanding of the invention defined by the appended claims and are not to be seen as limiting.

## Claims

1. A heat exchange assembly for a battery system, the battery system comprising a plurality of battery cells and at least one electronic component, the heat exchange assembly comprising:
a heat exchange plate, the heat exchange plate comprising a first plate and a second plate arranged to face the first plate,
the heat exchange plate being arranged to accommodate the plurality of battery cells on at least one of the first plate and the second plate in a first portion of the heat exchange plate and being arranged to accommodate the at least one electronic component on at least one of the first plate and the second plate in a second portion of the heat exchange plate,
the heat exchange plate further comprising at least one first flow channel for accommodating a heat exchange fluid and formed between the first plate and the second plate in the first portion of the heat exchange plate.

2. The heat exchange assembly according to claim 1, wherein the heat exchange plate further comprises at least one second flow channel for accommodating the heat exchange fluid, wherein the at least one second flow channel is formed between the first plate and the second plate in the second portion of the heat exchange plate.

3. The heat exchange assembly according to claim 2, wherein the at least one second flow channel is formed to branch off from the at least one first flow channel on at least one position of the at least one first flow channel, wherein preferably the at least one position is in an inlet portion of the at least one first flow channel.

4. The heat exchange system according to claim 3, wherein the at least one second flow channel is formed to branch into the at least one first flow channel on at least one position of the at least one first flow channel, wherein preferably the at least one position is in an outlet portion of the at least one first flow channel.

5. The heat exchange assembly according to claim 4, further comprising at least one third flow channel, a first restriction means and a second restriction means, wherein the at least one third flow channel is arranged to be in a fluid communication with the at least one first flow channel and is arranged to be in a fluid communication with the at least one second flow channel via the second restriction means, wherein the first restriction means is arranged to control the heat exchange fluid flow between the at least one second flow channel and the at least one first flow channel at the position where the at least one second flow channel branches into the at least one first flow channel, and the second restriction means is arranged to control the heat exchange fluid between the at least one second flow channel and the at least one third flow channel.

6. The heat exchange assembly according to claim 4, further comprising at least two first restriction means arranged between the at least one second flow channel and the position of the at least one first flow channel where the at least one second flow channel branches off from the at least one first flow channel, and further comprising at least two second restriction means arranged between the at least one second flow channel and the position where the at least one second flow channel branches into the at least one first flow channel, wherein each one of the two first restriction means is arranged to control the heat exchange fluid flow in the opposite direction of the other one of the two first restriction means and each one of the two second restriction means is arranged to control the heat exchange fluid flow in the opposite direction of the other one of the two second restriction means.

7. The heat exchange assembly according to claim 2, wherein the at least one second flow channel is an extension of the at least one first flow channel in the second portion of the heat exchange plate.

8. The heat exchange assembly according to any one of claims 2 to 7, wherein each of the at least one first flow channel and at least one second flow channel comprises at least one bend portion, wherein preferably the number of bend portions of the at least one first flow channel is different from the number of bend portions of the at least one second flow channel, wherein preferably the cross-sectional area of the at least one first flow channel is different from the cross-sectional area of the at least one second flow channel.

9. The heat exchange assembly according to any one of claims 1 to 8, wherein the first portion and the second portion of the heat exchange plate are adjacent to each other and are arranged in a plane or the first portion and the second portion of the heat exchange plate are adjacent to each other and are arranged in different planes with an angle between them.

10. The heat exchange assembly according to any one of claims 1 to 9, wherein the first portion and the second portion are continuous portions of the heat exchange plate.

11. The heat exchange assembly according to any one of the preceding claims, further comprising at least one heat exchange member arranged on the first plate and/or the second plate for transferring heat from the at least one electronic component to the first portion of the heat exchange plate.

12. The heat exchange assembly according to claim 11, wherein the at least one heat exchange member comprises at least one tube element filled with a phase-changing medium.

13. The heat exchange system according to claim 12, wherein the at least one tube element has at least one contact surface arranged to be in contact with the heat exchange plate or in contact with the at least one electronic component, wherein the at least one contact surface of the at least one tube element is flat surface or curved surface, wherein the contact is direct contact or indirect contact.

14. The heat exchange assembly according to any one of claims 11 to 13, wherein the heat exchange member is arranged in the second portion and extends at least to a part of the first portion, wherein preferably the heat exchange member is arranged in the second portion in an area which at least partially overlaps with an area arranged to accommodate the at least one electronic component, wherein preferably the heat exchange member is arranged in the first portion in an area that does not overlap with an area arranged to accommodate the plurality of battery cells.

15. The heat exchange assembly according to claim 14, wherein the heat exchange member has at least one bend portion with bending angle corresponding to the angle between the first portion and the second portion.

16. The heat exchange assembly according to any one of claims 11 to 15, wherein the heat exchange member is arranged on one of the first plate and second plate and the plurality of battery cells are arranged on the other one of the first plate and second plate.

17. The heat exchange assembly according to any one of claims 11 to 16, wherein the first plate and the second plate are joined together by at least one lateral surface, wherein the heat exchange member is arranged on the at least one lateral surface in the second portion and extends at least to a part of the first portion.

18. An energy storage system comprising:
a plurality of battery cells;
at least one electronic component adapted to control electrical output of the plurality of battery cells; and
a heat exchange assembly supporting the plurality of battery cells and the at least one electronic component, the heat exchange assembly comprising:
a heat exchange plate having a first plate and a second plate arranged to face the first plate, the plurality of battery cells being arranged on a first portion of the heat exchange plate, the at least one electronic component being arranged on a second portion of the heat exchange plate such that there is a predefined gap along the heat exchange plate between the plurality of battery cells and the at least one electronic component,
a first fluid channel for accommodating a heat exchange fluid and formed between the first plate and the second plate in the first portion of the heat exchange plate, and a second fluid channel for accommodating the heat exchange fluid and formed between the first plate and the second plate in the second portion of the heat exchange plate,
wherein the second fluid channel branches off from an inlet portion of the first fluid channel to an outlet portion of the first fluid channel to bypass the first portion of the heat exchange plate, wherein a first portion of the heat exchange fluid passes through the first fluid channel to perform heat exchange with the plurality of battery cells, and a second portion of the heat exchange fluid passes through the second fluid channel to perform heat exchange with the at least one electronic component,
wherein the second fluid channel has a sinusoidal profile, and has a cross-sectional area different from the cross-sectional area of the first fluid channel such that a fluid flow rate through the first fluid channel is different from the fluid flow rate through the second fluid channel, wherein a heat exchange rate between the plurality of battery cells and the first portion of the heat exchange plate is different from a heat exchange rate between the electronic component and the second portion of the heat exchange plate.
